# EUROPEAN PATENT APPLICATION

(11) **EP 1 180 532 A1**
(43) Date of publication of application: **20.02.2002**
(21) Application number: 01306997.6
(22) Date of filing: 17.08.2001
(51) Int. Cl.: C08J 3/12, A01K 1/015, C08L 1/26, C08B 11/00

(54) **Pet waste-absorbing granular material and cellulose ether therefor**

(30) Priority: 18.08.2000 JP 2000248532
(71) Applicant: SHIN-ETSU CHEMICAL CO., LTD., Chiyoda-ku Tokyo (JP)
(72) Inventor: Hayakawa, Kazuhisa, c/o Specialty Chem, Res. Ctr., Kubiki-mura, Nakakubiki-gun, Niigata-ken (JP)
(74) Representative: Stoner, Gerard Patrick

(57) **Abstract**

A cellulose ether having a viscosity of at least 80,000 mPa•s, as measured in a 2 wt% aqueous solution thereof at 20°C by Ubbelohde's viscometer No. 5 according to JIS K2283-1993 is useful as a binder in the preparation of pet waste-absorbing granular material. The pet waste-absorbing granules effectively gather into clumps upon contact with pet urine, are economical because of a reduced weight per urination of granules gathered into clumps to be removed, and are combustible or disposable by flushing in the toilet.

## Description

This invention relates to the preparation of granular material for absorbing pet waste, known as "pet litter" or "cat litter." More particularly, it relates to a cellulose ether for use as a binder in the preparation of pet waste-absorbing granular material. It also relates to the granular materials made using the cellulose ether.

### Background

Granular material for absorbing pet waste is generally prepared utilizing as a base hygroscopic inorganic minerals such as zeolite and bentonite, hygroscopic polymers, and organic materials, typically organic wastes, for example, cellulose components such as wood flour, pulp, sawdust and linter, and protein components such as soybeans and soybean-curd refuse. A proportion of synthetic binder which will become tacky upon contact with water, such as cellulose ether, starch and PVA is added to the base, and water added thereto. The resulting composition is granulated into granules or pellets having a size of about 3 mm to about 20 mm, followed by drying. When pets, typically cats and dogs, urinate in a litterbox filled with such granules, granules absorb urine. Then the synthetic binder such as cellulose ether on the granule surface becomes dissolved so that the granules having absorbed urine cluster together to form clumps. Clumps can be selectively scooped out in a distinguishable way from granules having not absorbed urine. Only those granules having absorbed urine can be removed and discarded. This ensures the economic consumption of pet litter. Recently, granules based on pulp which is biodegradable in sewage disposal clarifiers or septic tanks are manufactured so that clumps of granules gathered due to urine absorption can be disposed of by flushing in the toilet. Some other granules can be handled as combustible waste to be disposed of, as by incineration.

Cats and dogs kept as house pets have the behavior that they do not pass urine next in the litterbox unless urine becomes disappeared immediately after urination and unless the litterbox is relatively clean. It is thus recommended that soon after urination, clumps of granules having absorbed urine are scooped out for disposal.

Of the inorganic minerals and organic materials used as the base of absorbent granules, it is desirable to select those materials having a high capacity to absorb water and an appropriate size. However, such materials are difficult to be commercially processed into absorbent granules which are required to be inexpensive. To produce inexpensive absorbent granules, it is attempted to use industrial wastes including wood chips, sludge and papermaking by-products left as a large quantity of refuse in the papermaking industry, recycled paper pulp, rice and wheat husks as agricultural refuse, and soybean-curd refuse. Such industrial wastes, however, largely vary in quality, and there are available no additives which can compensate for such quality variations.

One additive is disclosed in Japanese Patent No. 2,967,160 which proposes to use a cellulose ether having a controlled degree of substitution with specific substituent groups and a controlled viscosity.

Because of their production based on a chemical reaction process, these cellulose ethers are expensive: from several times to tens of times the cost of naturally occurring inorganic materials and organic materials available as wastes which are used as the base of urine-absorbing granular material. Art-recognized cellulose ethers must be added in large amounts to the base material in order to produce urine-absorbing granules having an appropriate size so that clumps of urine-absorbed granules may be scooped out. The use of the existing cellulose ethers gives rise to an economic problem particularly when the proportion of lightweight base such as organic material is increased in order to produce absorbent granules at a low cost using such a formulation that urine-absorbing granules are large in apparent bulk, but reduced in material weight, and/or when the proportion of combustible organic material is increased in order to facilitate incineration of absorbent granules. Since a larger bulk requires a greater binding force, the cellulose ether must be added in a relatively large amount e.g. more than about 10% by weight, which is reflected in a higher manufacturing cost.

For the above reason, desirably bulky pet waste-absorbing granular materials could not be manufactured. Only pet waste-absorbing granular materials having a large proportion of inorganic component such as bentonite are currently available on the market. They are less combustible, and a large amount of granules is consumed per urination because of the low bulk. Pet keepers are forced to use cost ineffective granular litters for disposal of pet wastes.

The general aim herein is to provide new pet waste-absorbing granular materials incorporating cellulose ether, new methods of making such materials exploiting cellulose ethers, and new cellulose ethers for incorporation in such materials. One preferred aim is for a cellulose ether to be effectively added in smaller amounts in preparing a pet waste-absorbing granular material. Preferably the material is combustible and/or disposable by flushing in the toilet. Another preferred aim is low or reduced weight of clumped granules per urination.

It has been found that better results are obtained when a powdery, water-soluble cellulose ether having a viscosity of at least 80,000 mPa·s, as measured in a 2 wt% aqueous solution thereof at 20°C by Ubbelohde's viscometer No. 5 according to JIS K2283-1993 is added to a pet waste-absorbing granular material. This cellulose ether has an increased binding force so that even a small amount of the cellulose ether added allows the content of organic component in the pet waste-absorbing granular material composition to be increased. The resulting granular material is combustible or disposable by flushing in the toilet. The consumption of granular material per urination is reduced. Thus the pet waste-absorbing granular material is convenient and economical.

The invention thus provides a cellulose ether for use in the preparation of pet waste-absorbing granular material, having a viscosity of at least 80,000 mPa·s, as measured in a 2 wt% aqueous solution thereof at 20°C by Ubbelohde's viscometer No. 5 according to JIS K2283-1993.

A pet waste-absorbing granular material comprising the cellulose ether as a binder is another aspect, also a method of making such material.

### DETAILED EXPLANATIONS; PREFERRED AND OPTIONAL FEATURES

According to the invention, the cellulose ether for use as a binder in the preparation of pet waste-absorbing granular material is characterized by having a viscosity of at least 80,000 mPa·s, as measured in a 2 wt% aqueous solution thereof at 20°C by Ubbelohde's viscometer No. 5 according to JIS K2283-1993.

The cellulose ether chemical type is not critical and includes all cellulose ethers which are obtained by etherifying celluloses to be soluble in water. Examples include alkyl celluloses, hydroxyalkyl alkyl celluloses, hydroxyalkyl celluloses, and carboxymethyl celluloses. More illustrative examples are methyl cellulose, hydroxypropyl methyl cellulose, hydroxyethyl methyl cellulose, hydroxyethyl cellulose, hydroxypropyl cellulose, hydroxyethyl ethyl cellulose, and carboxymethyl cellulose. Preferred examples are alkyl celluloses such as watersoluble methyl cellulose (MC) containing 10 to 40% by weight of methoxyl groups; hydroxyalkyl alkyl celluloses such as hydroxypropyl methyl cellulose (HPMC) containing 10 to 40% by weight of methoxyl groups and 3 to 30% by weight of hydroxyalkyl groups for enhancing solubility, hydroxyethyl methyl cellulose (HEMC), and hydroxyethyl ethyl cellulose (HEEC) containing 5 to 20% by weight of ethoxyl groups and 10 to 45% by weight of hydroxyethoxyl groups; hydroxyalkyl celluloses such as hydroxypropyl cellulose (HPC) containing 40 to 70% by weight of hydroxypropoxyl groups and hydroxyethyl cellulose (HEC) containing 30 to 70% by weight of hydroxyethoxyl groups; and carboxymethyl celluloses such as sodium carboxymethyl cellulose (CMC-Na) containing 1 to 30% by weight of carboxymethoxyl groups. It is noted that the degree of substitution in these celluloses can be measured according to the procedure by Zeisel-GC described in J. G. Gobler, E. P. Samsel and G. H. Beaber, Talanta, 9, 474 (1962).

The cellulose ether should have a higher molecular weight enough to provide a higher binding force. High molecular weight cellulose ether undergoes association upon measurement of molecular weight, inhibiting accurate measurement. As an index corresponding to the molecular weight of cellulose ether, we therefore use viscosity as measured in a 2 wt% aqueous solution of the cellulose ether at 20°C by Ubbelohde's viscometer No. 5 according to JIS K2283-1993. The viscosity of the cellulose ether as prescribed above should be at least 80,000 mPa·s, preferably at least 140,000, more preferably at least 200,000 mPa·s. With viscosity less than 80,000 mPa·s, it becomes difficult to prepare a pet waste-absorbing granular material using a small amount of cellulose ether as a binder. In general, cellulose ethers are prepared by starting with natural celluloses which are known to have a maximum molecular weight of about 1,500,000. It is then estimated that cellulose ethers prepared from these materials will have in practice a viscosity as prescribed above of about 400,000 mPa·s at maximum.

Also desirably the cellulose ether powder used herein has a certain range of particle size so that the cellulose ether is highly soluble in water and readily dissolved in the granulating step, and even after it becomes insoluble in the granulating step, it is readily dissolvable in pet urine. Specifically, the cellulose ether powder should desirably have a particle size such that not more than 50wt%, more preferably not more than 25wt%, is retained by a standard sieve No. 100 with openings of 150 µm. For example, 100g of the particles, the sieving as prescribed by JIS Z8801 shaking for 30 minutes (e.g. by Model 429 Ro-Tap sieve shaking machine (Kansai Kanaami K.K.)) at a shaking frequency of 200 cycles/min, a tapping number of 156 taps/min and a stroke of 50 mm.

As seen from the foregoing, the cellulose ether used herein must be prepared from a cellulose raw material having a very high molecular weight. In one typical procedure, such cellulose ether can be prepared using a high molecular weight linter material obtainable from cotton e.g. as described in JP-B 7-119241 (which procedure description is incorporated herein in both its general and its specific terms).

In the preparation of a pet waste-absorbing granular material, the cellulose ether is preferably added in an amount of at least 0.5% by weight, more preferably at least 1% by weight of the absorbent granular material. With less than 0.5% of the cellulose ether, the absorbent granules may fail to absorb pet urine and to gather into clumps. Routine testing can find the practical minimum for given materials. More than 5wt% of the cellulose ether may increase the manufacturing cost of the granules, so not more than 5wt% is preferred.

The base of the pet waste-absorbing granular material includes hygroscopic inorganic minerals such as zeolite and bentonite, hygroscopic polymers, and organic materials, typically organic wastes, for example, cellulose components such as wood flour, pulp, sawdust and linter, and protein components such as soybean and soybean-curd refuse. Various other additives may be blended, including wettability modifiers or surfactants described in JP-A 7-313963, sodium carbonates for activating bentonite to enhance hygroscopicity, and hygroscopic polymers.

The proportion of the ingredients may be determined as appropriate. In order that the absorbent granular material be gathered into clumps upon contact with water, combustible, disposable of by flushing in the toilet, and economical, it is desirably prepared from a base containing more than 50% by weight of an organic component. Water can be added to a mixture of the base, cellulose ether and optional additives in a sufficient amount to enable granulation to granules which are likely to gather into clumps. The method for the preparation of the pet waste-absorbing granular material is not however critical. It may be selected from known methods.

### EXAMPLE

Examples of the invention are given below by way of illustration and not by way of limitation.

### Examples 1-8 & Comparative Examples 1-3

### Preparation of absorbent granules

A series of pet waste-absorbing granular materials were prepared using a variety of cellulose ethers and tested, both as described below. The cellulose ethers used had a particle size such that when 100 g of cellulose ether particles was placed on a 100-mesh standard sieve with an opening of 150 µm as prescribed by JIS Z8801 which was shaken for 30 minutes by Model 429 Ro-Tap sieve shaking machine (Kansai Kanaami K.K.) at a shaking frequency of 200 cycles/min, a tapping number of 156 taps/min and a stroke of 50 mm, the oversize fraction was as shown in Table 1; had substituent groups selected from among methoxyl, hydroxypropoxyl, hydroxyethoxyl, ethoxyl and carboxymethoxyl in amounts as shown in Table 1; and had a viscosity, measured in a 2 wt% aqueous solution at 20°C by Ubbelohde's viscometer No. 5 according to JIS K2283-1993, as shown in Table 1.

The cellulose ether shown in Table 1, wood flour, bentonite and optionally, sodium carbonate as an activator for bentonite were blended in amounts as shown in Table 2, and agitated for 30 seconds in a 20-liter Super-Mixer (Kawada Mfg. K.K.) by rotating a mixer blade at 1000 rpm. A predetermined amount of water shown in Table 2 was added to the mixture, which was further agitated for 30 seconds at the same agitation speed. The mixture was discharged from the mixer to a cylindrical extrusion granulating machine Model RG8-2 (Kikusui Mfg. K.K.) with a 3-mm screen where the mixture was granulated. The product was dried at 80°C for 8 hours in an air blowing oven Model DN83 (Yamato Kagaku K.K.), obtaining pet waste-absorbing granules.

Note that the wood flour was Douglas fir wood flour, 80-mesh pass, 200-mesh on 15-25 wt%, available from Ace International Inc.; the bentonite was available under the trade name Kunibond from Kunimine Industry K.K.; and the sodium carbonate was of laboratory grade from Wako Junyaku K.K.

### Evaluation of absorbent granules

A 500-ml clear plastic cylinder having an inlet diameter of about 25 mm was filled with the pet waste-absorbing granules. Using a burette, 20 ml of a 2 wt% aqueous solution of sodium chloride, simulating pet urine, was added. After 30 seconds from the addition, it was examined whether the granules gathered into a clump. The test sample was rated OK when the granules were removed from the cylinder as a clump and NG when the granules could not be removed as a clump, but in broken pieces. Upon removal from the cylinder, the weight of the clump was measured and reported in Table 3.

To observe the disintegration of the clump in water, the clump as above was placed in a beaker which was filled with 500 ml of water. After 15 seconds, the water was poured into a funnel from which was suspended a hose having a diameter of 5 mm and a length of 50 cm. It was observed whether disintegrated fragments of the clump were carried to the outlet of the hose without clogging midway the hose. The test sample was rated OK for smooth flow without clogging and NG for clogging.

To observe the incineration of the clump, clumps were placed in an electric oven which was heated at 700°C for 8 hours for incineration. The test sample was rated OK when the residue left after incineration was less than 50% by weight of the initial weight of the clumps and NG when the residue was more than 50% by weight of the initial.

The results are shown in Table 3.

**Table 1**

| | Particle size, substitution and viscosity of cellulose ether | | | | | | |
|---|---|---|---|---|---|---|---|
| | 100-mesh sieve on (wt%) | Methoxyl group (wt%) | Ethoxyl group (wt%) | Hydroxyethoxyl (wt%) | Hydroxypropoxyl group (wt%) | Carboxymethoxyl group (wt%) | Viscosity (mPa·s) |
| E1 | 15 | 24 | | | 10 | | 200,000 |
| E2 | 5 | 10 | | 30 | | | 80,000 |
| E3 | 20 | 30 | | | | | 200,000 |
| E4 | 23 | 24 | | | 7 | | 150,000 |
| E5 | 23 | | 20 | 45 | | | 80,000 |
| E6 | 10 | | | 45 | | | 100,000 |
| E7 | 5 | | | | 55 | | 400,000 |
| E8 | 10 | | | | | 10 | 400,000 |
| CE1 | 10 | | 20 | 45 | | | 50,000 |
| CE2 | 20 | | 20 | 45 | | | 50,000 |
| CE3 | 40 | 24 | | | 7 | | 70,000 |

**Table 2**

| | Addition amount (pbw) | | | | |
|---|---|---|---|---|---|
| | Cellulose ether | Wood flour | Bentonite | Water | Sodium carbonate |
| E1 | 3 | 50 | 50 | 50 | 4 |
| E2 | 6 | 50 | 50 | 50 | |
| E3 | 6 | 50 | 50 | 50 | 4 |
| E4 | 4 | 50 | 50 | 50 | |
| E5 | 5 | 50 | 50 | 50 | |
| E6 | 5 | 50 | 50 | 50 | |
| E7 | 6 | 50 | 50 | 50 | |
| E8 | 6 | 50 | 50 | 50 | |
| CE1 | 15 | 50 | 50 | 50 | |
| CE2 | 12 | 30 | 70 | 40 | 6 |
| CE3 | 11 | 30 | 70 | 50 | 4 |

**Table 3**

| Test results | | | | | |
|---|---|---|---|---|---|
| | Apparent specific volume of granules (liter/kg) | Clumping after water absorption | Clump weight after water absorption (g) | Disintegration in water | Incineration |
| E1 | 3.6 | OK | 30 | OK | OK |
| E2 | 3.6 | OK | 29 | OK | OK |
| E3 | 3.6 | OK | 29 | OK | OK |
| E4 | 3.6 | OK | 29 | OK | OK |
| E5 | 3.6 | OK | 29 | OK | OK |
| E6 | 3.6 | OK | 29 | OK | OK |
| E7 | 3.6 | OK | 29 | OK | OK |
| E8 | 3.6 | OK | 29 | OK | OK |
| CE1 | 3.6 | NG | Unmeasurable | OK | OK |
| CE2 | 2.5 | NG | 33 | NG | NG |
| CE3 | 2.5 | NG | 34 | NG | NG |

It is evident from Tables 1 to 3 that Examples using cellulose ether samples having such a particle size as to give a 100-mesh oversize fraction of up to 25% by weight and a viscosity of at least 80,000 mPa·s in a 2 wt% aqueous solution at 20°C afforded pet waste-absorbing granules which effectively gathered into clumps and were combustible and disposable by flushing even though the amount of cellulose ether added was smaller than in Comparative Examples.

There have been described pet waste-absorbing granules which effectively gather into clumps upon contact with pet urine, are reduced in the weight per urination of granules gathered into clumps to be removed, and are combustible or disposable by flushing in the toilet.

Japanese Patent Application No. 2000-248532 is incorporated herein by reference.

Although some preferred embodiments have been described, many modifications and variations may be made thereto in light of the above teachings. It is therefore to be understood that the invention may be practiced otherwise than as specifically described in the Examples.

## Claims

1. A cellulose ether for use in the preparation of pet waste-absorbing granular material, having a viscosity of at least 80,000 mPa·s, as measured in a 2 wt% aqueous solution thereof at 20°C by Ubbelohde's viscometer No. 5 according to JIS K2283-1993.

2. The cellulose ether of claim 1 which is selected from the group consisting of an alkyl cellulose, hydroxyalkyl alkyl cellulose, hydroxyalkyl cellulose and carboxymethyl cellulose.

3. The cellulose ether of claim 1 which has such a particle size that when cellulose ether particles are placed on a sieve with an opening of 150 µm which is shaken, a fraction of oversize particles accounts for up to 50% by weight of the entire cellulose ether.

4. A pet waste-absorbing granular material comprising hygroscopic base material and cellulose ether as binder, **characterised in that** the cellulose ether is one whose 2wt% aqueous solution has a viscosity of at least 80,000 mPa·s at 20°C, as measured by Ubbelohde's viscometer No.5 according to JIS K2283-1993.

5. A method of making a pet waste-absorbing granular material, **characterised by** the use as a binder of a cellulose ether as defined in any one of claims 1 to 3.

6. A pet waste-absorbing granular material obtained by a method according to claim 5.
